# EUROPEAN PATENT APPLICATION

(11) **EP 4 564 157 A1**
(43) Date of publication of application: **04.06.2025**
(21) Application number: 24216370.7
(22) Date of filing: 29.11.2024
(51) Int. Cl.: G06F 7/58, H04W 12/041, H04B 7/04, H04L 9/08

(54) **TRANSMISSION SYSTEM AND USER DEVICE FOR RANDOM NUMBER GENERATION**

(30) Priority: 01.12.2023 EP 23213681
(71) Applicant: Koninklijke KPN N.V., 3072 AP Rotterdam (NL); Nederlandse Organisatie voor Toegepast-Natuurwetenschappelijk Onderzoek (TNO), 2595 DA 's-Gravenhage (NL)
(72) Inventor: Duffy, David Michael, 8047 Zurich (CH); Meunier, Ben Charles Emmanuel, Tonbridge, TN10 4JT (GB); Norp, Antonius Hendrikus Johannes, 2584 EN Den Haag (NL)
(74) Representative: De Vries & Metman

(57) **Abstract**

The disclosure pertains to a transmission system for wireless transmission of a randomly manipulated signal over a communication channel to at least one user device. The user device is configured for generating at least one random number from one or more measurements on the randomly manipulated signal. The transmission system may comprise a random number generation controller configured for random signal manipulation to generate the randomly manipulated signal for wireless transmission over the communication channel to enable the user device to generate the random number from measurements on the manipulated signal. The disclosure also relates to a user device for use with the transmission system.

## Description

### TECHNICAL FIELD

The present disclosure relates to a transmission system and user device for random number generation. More particularly, the disclosure relates to a transmission system enabling even low-complexity, low-energy devices to generate random numbers.

### BACKGROUND

Both true and pseudo- random numbers have several applications in electronic communications, including wireless communication. Well-known applications include secure transmissions of data over an air interface and secure storage of data in both a sender device and a recipient device. Random numbers may be used in cryptography schemes, for example, or to generate random noise for data entries to enhance security of data in transfer and in rest.

Generating such true random numbers or pseudo-random numbers is not a straightforward or easy task for all types of devices and under all circumstances. One direction taken in the prior art is to use channel information as a source of randomness. US 8 015 224, for example, discloses a user device having a data channel, in which random numbers are needed for a data storage device, that uses random numbers to generate keys for cryptographic applications. Random numbers are generated by a deterministic random bit generator seeded by bits derived from noise on the channel itself. A data signal emulator in the data storage device is provided to simulate a data signal if a seed is required at a time when there is no data activity on the channel.

### SUMMARY

The inventors have considered that for some types of user devices, for example low-energy or zero-energy devices, (pseudo-) random number generation is a challenge in view of their strict hardware limitations. For example, for ambient loT devices harvesting energy from their surroundings and having low-complexity hardware, it is generally infeasible to generate (pseudo-) random numbers of sufficient quality.

For such devices, measuring channel information and using non-static and complex noise on such a channel for effective random number generation may be an outcome. Such a channel state may also be referred to as a high entropy state. However, communication channels may be static and not random enough for such a purpose, i.e. communication channels may have low entropy.

The inventors have realized that a solution is desirable that enables a user device, such as a low-complexity, low-power device, to generate random numbers by measuring channel information in a more reliable fashion.

To that end, one aspect of the disclosure pertains to a transmission system for wireless transmission of a randomly manipulated signal over a communication channel to at least one user device. The user device is configured for generating at least one random number from one or more measurements on the randomly manipulated signal. The transmission system may comprise a random number generation controller configured for random signal manipulation to generate the randomly manipulated signal for wireless transmission over the communication channel to enable the user device to generate the random number from measurements on the manipulated signal.

Another aspect of the disclosure defines a user device for use with the transmission system as disclosed herein. The user device is configured to receive a randomly manipulated signal, for example a random signal or a randomly manipulated data signal, from the transmission system and to perform one or more measurements on the received randomly manipulated signal. The user device may further be configured to generate one or more random numbers based on the measurements performed on the received randomly manipulated signal.

The random number generation controller in the transmission system facilitates that the user device has available an externally generated signal that is sufficiently random for random number generation irrespective of the conditions on the communication channel and irrespective of the hardware of the user device, provided that the user device must be able to conduct one or more measurements on the manipulated signal to generate the (pseudo-) random number(s). Randomly manipulating the signal may include randomly manipulating one or more random factors, such as adding random noise, randomly changing reflections, random phase changes, random fading, doppler shifts, randomly changing power levels, etc. that result in random channel state measurements at the user device. The random number generation controller may be controllable to adapt the manipulation of the randomly manipulated signal. Hence, low-complexity, low-energy user devices in low noise environments may be enabled to generate one or more random numbers.

In one embodiment, the randomly manipulated signal contains a data signal with data for the user device. The random number generation controller is configured to randomly manipulate the data signal to obtain a randomly manipulated data signal for transmission over the communication channel to enable the user device to generate the at least one random number from measurements on the randomly manipulated data signal.

The inventors have considered that under some circumstances, for example when a minimum data throughput can be achieved easily, the data signal may be manipulated to have a sufficiently random signal for the user device to generate random numbers, while on the other hand, the data is safely, i.e. correctly, delivered to the user device(s) at an appropriate data rate. The random number generation controller may be configured to find this balance, for example to add random changes to the data channel that allows for both the data to be correctly delivered at the appropriate rate and to generate random numbers from measurements on the randomly changing data channel.

In one embodiment, the random number generation controller is configured to generate a random signal as the randomly manipulated signal for transmission over the communication channel to enable the user device to generate the at least one random number from measurements on the random signal.

In contrast to the user device, the transmission system may have sufficient capabilities to generate a (pseudo-)random signal. If a (user)data signal does not exist or if manipulation of the data signal is not desired or possible, this embodiment facilitates random number generation in the user device by offering a random signal from the transmission system. For example, a low-complexity, low-energy device in a static noise environment would still be able to generate one or more random numbers from the random signal.

In one embodiment, the transmission system may contain a resource allocation system configured to allocate resources to the transmission of the randomly manipulated signal.

Allocating resources, such as timing transmission of the randomly manipulated signal, enables one or more system components and/or devices to take account of the transmission of the randomly manipulated signal. For example, network tasks, such as network sensing, may be scheduled around the transmission of the randomly manipulated signal and, vice versa, transmission of the manipulated signal may be scheduled such that its effects are minimally invasive to system performance (for example, by scheduling transmission of the manipulated signal when communication load is low, (e.g. at night)).

It should be appreciated that the transmission system may allocate one or more system resources to transmission of the randomly manipulated signal, such as time, frequency (band), code, etc. The resource allocation system may, for example, include a scheduling system for scheduling the transmission of the randomly manipulated signal in time.

In one embodiment, the transmission system is configured to inform the at least one user device of resource allocation information for transmission of the manipulated signal.

In one embodiment, the user device is configured to receive resource allocation information from the transmission system.

The resource allocation information may contain scheduling information containing information about when to receive the manipulated signal. The resource allocation information may also indicate the frequency of the randomly manipulated signal and/or information on a code associated with the randomly manipulated signa.

The user device may be configured to process the resource allocation information to generate the one or more random numbers in accordance with the resource allocation information. In this manner, the user device is informed when and/or how it can generate random numbers from its measurements, i.e. when the entropy of the channel may be high enough for appropriately performing this task.

Particularly, the resource allocation system may be configured to allocate separate resources to transmission of a data signal and transmission of the random signal as the randomly manipulated signal separately on the communication channel. Separate allocation of resources for the transmission of the data signal and the random signal may involve planning an exclusive time interval, or time slot and/or frequency and/or code for transmission of the random signal distinct from transmission of the data signal. In this embodiment, it is foreseen that both a data signal and a random signal are transmitted to the user device, while not needing to manipulate the data signal, to enable the user device to generate one or more random numbers.

In one embodiment, the resource allocation system may be configured to allocate resources to the random signal dependent on at least one of resource allocation to the data signal, load of a network accommodating the transmission system, etc. This embodiment enables the random number generation controller to take other factors into account, such as safe data delivery, reducing network load, etc. by appropriate resource allocation, for example, scheduling transmission of the random signal at appropriate times.

In one embodiment, the transmission system may be configured to receive a feedback signal from the user device, wherein the random number generation controller is configured to be controlled, at least in part, by the feedback signal.

In one embodiment, the user device may be configured to transmit a feedback signal to the transmission system after generation of the one or more random numbers.

Generally, this embodiment enables the transmission system, more particularly the random number generation controller, to control the transmission of and/or the random signal manipulation of the randomly manipulated signal, for example dependent on one or more conditions in the user device.

More particularly, in one embodiment, the feedback signal may contain one or more of the generated random numbers (or the information from which these number(s) has been derived). The embodiment enables the transmission system to obtain the random numbers from a user device, for example, to assess the randomness thereof. The feedback signal may contain the random numbers as such, but the random numbers (or information from which these number(s) has been derived) may also be transmitted together with further information from the user device. In one embodiment, the random numbers may be sent in the feedback signal together with data transmitted from the user device to the transmission system, for example for padding small amounts of data in a feedback channel.

In another embodiment, for example, the randomly manipulated signal is a randomly manipulated data signal from which random numbers have been generated, and the feedback signal contains an indication of the delivery of the data. The indication in the feedback signal may be a positive acknowledgement that the data was delivered to the user device. This indication signals to the transmission system that the random signal manipulation of the data signal did not interfere with good delivery of the data contained in the data signal. Conversely, if the feedback signal contains an indication that the data was not delivered to the user device, i.e. a negative acknowledgement, this indication signals that the random signal manipulation was too severe for the data to be delivered to the user device under the current channel conditions.

To obtain the previously mentioned advantages, the disclosure also defines a transmission system wherein the feedback signal contains one or more random numbers. The random number generation controller may be configured to conduct a randomness assessment on the random numbers to obtain a randomness assessment result and to adapt the random signal manipulation in dependence on the random assessment result.

Likewise, the present disclosure defines a transmission system, wherein the randomly manipulated signal contains a data signal with data for the user device and the randomly manipulated signal is a randomly manipulated data signal, wherein the feedback signal contains an indication of delivery of the data at the user device. The random number generation controller may be configured to adapt the random signal manipulation of the data signal in dependence on the indication of delivery of the data.

Still further, the disclosure defines a transmission system with a random number generation controller containing a resource allocation system for separate allocation of resources to the transmission of the data signal and to the random signal, wherein the resource allocation system is configured to allocate resources to at least one of transmission of the random signal and transmission of the data signal in dependence on the feedback signal. For example, in this embodiment, the random number generation controller may contain a scheduling system configured to switch from transmission of the random signal to transmission of the data signal in dependence on the feedback signal.

The random number generation controller may need to assess whether the random signal manipulation enables the user device to generate random numbers of sufficient quality. Therefore, in one embodiment, the random number generation controller is configured to conduct a randomness assessment on the randomly manipulated signal to obtain a randomness assessment result and to adapt the random signal manipulation in dependence on the randomness assessment result. In other words, if the random number generation controller assesses that the generated signal is not sufficiently random, the controller may adjust the random signal manipulation to improve randomness of the signal.

On some occasions, it may be that the random signal manipulation is not required, since the communication channel itself is sufficiently dynamic for the user device to generate random numbers, e.g. due to interference on the channel from external sources, such as other devices. Generally, channel dynamics may arise, as noted above, from random noise, but also from changing reflections, phase changes, fading, doppler shifts, randomly changing power levels, etc. that result in different channel state measurements. To that end, the random number generation controller is configured to conduct a randomness assessment on the communication channel to obtain a randomness assessment result and start random signal manipulation in dependence on the randomness assessment result.

The random signal manipulation means to obtain the randomly manipulated signal, such as the random signal, may include a reconfigurable reflective surface, RRS, system, for example. Such an RRS is also referred to as reconfigurable intelligent surface, RIS, or intelligent reflective surface, IRS. An RRS is a technical component enabling dynamic manipulation of radio signals by manipulating phase, amplitude and/or polarization of impinging radio signals. Another means for this task may comprise a multiple-input multiple-output, MIMO, antenna system as part of a random number generation controller. MIMO allows dynamic manipulation of the phase of the radio signal, which may be controlled such that the data signal or random signal can be used for generating random numbers from this manipulation. Most transmitting devices or systems presently have on-board MIMO antenna systems which provides for a suitable way to generate the randomly manipulated signal.

The transmission system may be embodied in a variety of ways. In one embodiment, the transmission system is contained, at least in part, in a network component of a 3GPP standard compliant telecommunications network, such as a base station, or in a network component of a local network, such as an enterprise network. However, it should be appreciated that the transmission system may also be contained in a stand-alone device.

One particular embodiment for the transmission system is where the transmission system is contained in another user device, for example enabling device-to-device communication between the user device containing the transmission system and the user device that is configured to generate the one or more random numbers. This other user device is preferably not a low-power, low-complexity device since this device hosts the claimed transmission system. A suitable user device may be a, possibly handheld, reader device, such as a 3GPP standard compliant User Equipment, UE.

In one embodiment, the user device is an ultra-low energy device or zero energy device, such as a sensing device. For example, 3GPP recently issued a study on ambient power-enabled Internet of Things, loT, devices in Technical Recommendation 3GPP TR 22.840. The document discloses use cases and requirements for ambient power-enabled loT devices, hereinafter also referred to as ambient loT devices, being battery-less devices with limited energy storage capability (a capacitor may be included) wherein the energy is provided through the harvesting of radio waves, light, motion, heat or any other power source that could be suitable. Energy may, for example, be obtained from the randomly manipulated signal as defined above. Thus, energy is a very scarce resource in this context, and its usage is preferably optimized by limiting computations and/or the number and size of exchanged messages. Additionally, an ambient loT device may remain passive for extended periods of time before receiving a wake-up signal and starting to send data.

Another aspect of the present disclosure pertains to a method for transmitting a randomly manipulated signal from a transmission system over a communication channel to at least one user device, wherein the user device is configured for generating at least one random number from one or more measurements on the randomly manipulated signal. The method involves applying a random number generation controller generating randomly manipulated signal for wireless transmission over the communication channel to enable the user device to generate the random number from measurements on the randomly manipulated signal.

The disclosure further relates to a computer program comprising one or more software code portions that are configured to, when run on a computer system, to execute the method.

A further aspect of the present disclosure involves a method for use with the method in the transmission system comprising the steps of wirelessly receiving a randomly manipulated signal, for example a random signal or a randomly manipulated data signal, from a transmission system, perform one or more measurements on the received randomly manipulated signal and generate one or more random numbers based on the measurements performed on the received randomly manipulated signal.

The disclosure further relates to a computer program comprising one or more software code portions that are configured to, when run on a computer system, to execute the method.

The disclosure also involves a random number generation system comprising a transmission system as disclosed herein and at least one user device as disclosed herein. The transmission system is configured for wireless transmission of a randomly manipulated signal over a communication channel to the at least one user device. The transmission system may comprise a random number generation controller configured for random signal manipulation to generate the randomly manipulated signal for wireless transmission over the communication channel. The user device is configured to receive a randomly manipulated signal, for example a random signal or a randomly manipulated data signal, from the transmission system and to perform one or more measurements on the received randomly manipulated signal. The user device may further be configured to generate one or more random numbers based on the measurements performed on the received randomly manipulated signal.

The random number generation controller in the transmission system facilitates that the user device has available an externally generated signal that is sufficiently random for random number generation irrespective of the conditions on the communication channel and irrespective of the hardware of the user device, provided that the user device must be able to conduct one or more measurements on the manipulated signal to generate the (pseudo-) random number(s). The random number generation controller may be controllable to adapt the manipulation of the randomly manipulated signal. Hence, low-complexity, low-energy user devices in low noise environments may be enabled to generate one or more random numbers.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a schematic illustration of an embodiment of a random number generation system comprising a plurality of transmission systems and a plurality of user devices;
FIGS. 2A and 2B are schematic illustrations of an embodiment of a transmission system and a user device, respectively;
FIG. 2C is a schematic illustration of an embodiment of a zero-energy user device;
FIGS. 3A-3D are schematical illustrations of embodiments of operation of the transmission system and a user device in the random number generation system of FIG. 1;
FIG. 4A illustrates some steps of an embodiment of a method for operating the transmission system and user device;
FIGS. 4B and 4C are more detailed illustrations of some steps in an embodiment for operating the transmission system;
FIGS. 5A-5C are schematic illustrations of embodiments for resource allocation for a random number generation system as shown in FIG. 1;
FIGS. 6A and 6B show further embodiments for operating a transmission system and user device; and
FIG. 7 is of a processing system according to an embodiment of a transmission system or a user device for use with such a transmission system or a part thereof.

### DETAILED DESCRIPTION OF THE DRAWINGS

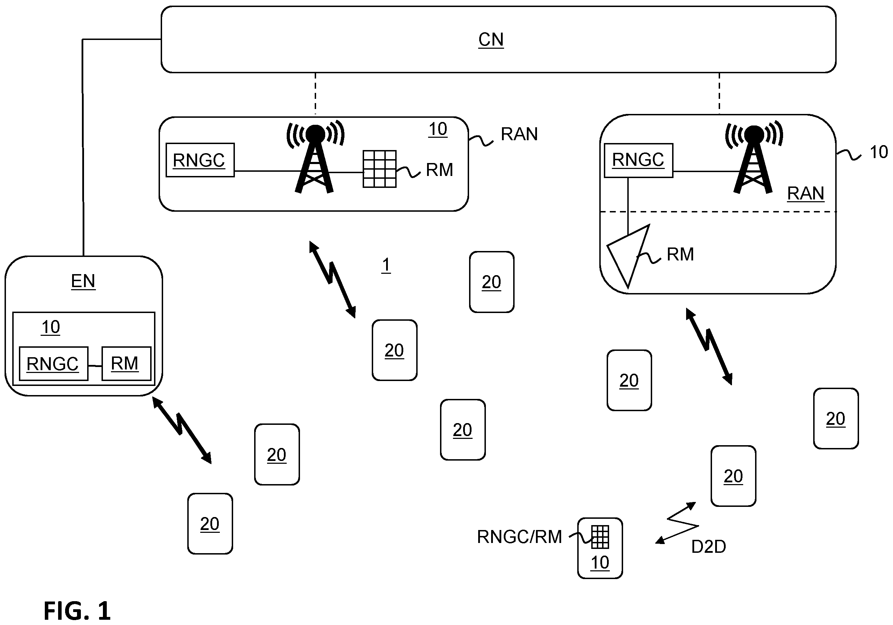

FIG. 1 is a schematic illustration of an embodiment of a random number generation system 1 comprising a plurality of transmission systems 10 configured for wirelessly transmitting a randomly manipulated signal and a plurality of user devices 20 configured to generate the one or more random numbers from a randomly manipulated signal wirelessly received from a transmission system 10. Randomly manipulating the signal may include one or more factors, such as adding random noise, randomly changing reflections, random phase changes, random fading, doppler shifts, randomly changing power levels, etc. that result in random channel state measurements at the user device 20.

As shown in FIG. 1, the transmission system 10 may be contained in a network component of a 3GPP standard compliant telecommunications network, such as a base station of a radio access network, RAN, such as a gNb of a 3GPP 5G- or 6G telecommunications network. The RAN may be connected to a core network, CN, of a telecommunications network, such as a 3GPP standard compliant 5G- or 6G CN. The RAN may comprise a random number generation controller RNGC and a randomizer means RM, such as a multiple-input multiple-output, MIMO, antenna to generate randomly manipulated signal for wireless transmission over a communication channel, as shown on the top left-hand side of FIG. 1.

On the top right-hand side of FIG. 1, another embodiment of a transmission system 10 is depicted schematically, wherein a base station of a RAN only operates as a source of a wireless signal and random manipulation of the signal is achieved by means of an external randomizer means RM, such as a reconfigurable reflective surface, RRS, system, for example. Such an RRS is also referred to as reconfigurable intelligent surface, RIS, or intelligent reflective surface, IRS. An RRS is a technical component enabling dynamic manipulation of radio signals by manipulating phase, amplitude and/or polarization of impinging radio signals. The RRS may be used to generate the randomly manipulated signal for wireless transmission over a communication channel as shown in FIG. 1. Random number generation controller RNGC may be embodied in the RAN or in the RRS or be distributed amongst components thereof.

Another embodiment shown in FIG. 1 comprises a local network, such as an enterprise network EN, including a transmission system 10 with a random number generation controller RNGC and randomizer means RM, for example a MIMO antenna, to generate the randomly manipulated signal for wireless transmission over a communication channel. Enterprise network EN may or may not be connected to the core network CN for a connection with the internet, for example.

FIG. 1, bottom part, also shows an embodiment of a user device containing a transmission system 10. The user device is, for example, configured for device-to-device, D2D, communication between the user device containing the transmission system 10 and the user device 20 that is configured to generate the one or more random numbers. This user device may be a, possibly handheld, reader device, such as a 3GPP standard compliant User Equipment, UE, having, for example, random number generation controller RNGC (not shown) and a randomizer means RM, such as a MIMO antenna system, for generating and transmitting a randomly manipulated signal.

It should be noted that the random number generation controller RNGC and randomizer means RM may be integrated into one component or module, as shown for the user device in FIG. 1, but are shown separately in some examples in this disclosure to illustrate control and transmission of the randomly manipulated signal conceptually.

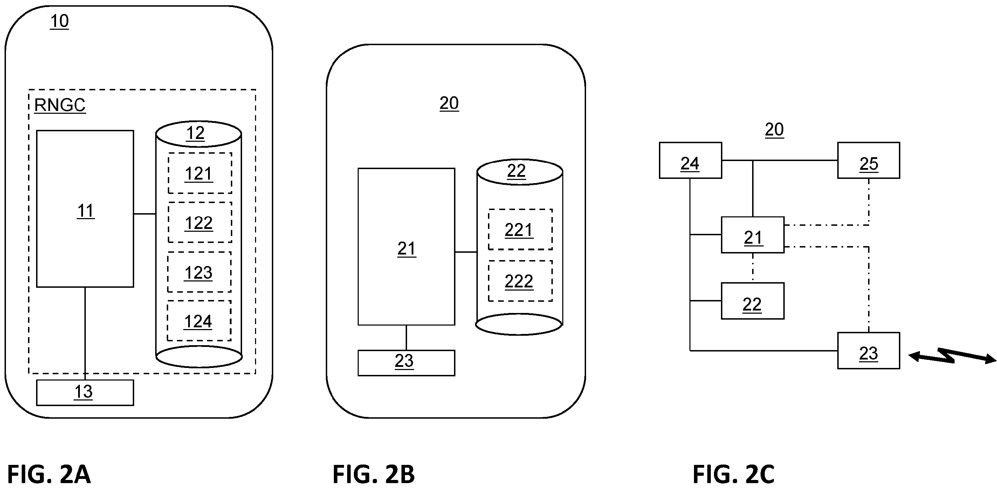

FIG. 2A is a schematic illustration of an embodiment of a transmission system 10.

In particular, transmission system 10 comprises a random number generation controller RNGC having a processing system 11 and a storage 12 storing a plurality of algorithms 121-124, for example. The random number generation controller RNGC is configured for random signal manipulation to generate the randomly manipulated signal for wireless transmission over a communication channel to enable a user device 20 to generate one or more random numbers from measurements on the manipulated signal from the transmission system 10.

Processing system 11 is configured to run one or more of the algorithms 121-124 to generate the randomly manipulated signal or assist with the generation thereof. The random number generation controller RNGC controls the transmission part 13 of the transmission system 10 to transmit the randomly manipulated signal to the user device(s) 20. Transmission part 13 may contain a randomizer means RM, as shown in FIG. 1, e.g. a MIMO antenna system or a reconfigurable reflective surface RRS. Transmission part 13 may also comprise a receiver part for receiving one or more feedback signals from a user device 20 as will be described in further detail below.

Algorithm 121 may comprise a control algorithm for performing the basic functions of the random number generation controller RNGC, i.e. to generate the randomly manipulated signal using the randomizer means RM. The algorithm may be used to manipulate a source signal to generate a random signal as the randomly manipulated signal or to randomly manipulate a data signal to obtain a randomly manipulated data signal by adding random noise, for example, to the communication channel. Algorithm 121 may use a store of pre-configured random signals for generating the randomly manipulated signal.

Algorithm 122 may comprise a resource allocation algorithm to allocate transmission resources, such as time, frequency and/or code, for transmission of the wireless randomly manipulated signal. For example, resource allocation algorithm may comprise a scheduling algorithm to schedule transmission of the randomly manipulated signal in time.

Algorithm 123 may comprise a random number generation algorithm for generating one or more sets of random numbers, for example from measurements on the communication channel by the user devices and reports thereof, for example channel state information, CSI, to generate random numbers to verify that the randomly manipulated signal is appropriate or if random manipulation is needed at all.

Algorithm 124 may comprise a randomness assessment algorithm. The randomness assessment algorithm may be used to evaluate the quality of the random numbers generated in the user device 20 from a received feedback signal from user device 20. The result of the assessment may be used to adjust the randomly manipulated signal when one or more quality criterium is not satisfied.

Algorithms 122-124 are optional of the transmission system 10. Algorithms 121-124 will be described in further detail below.

FIG. 2B shows a schematic illustration of an embodiment of a user device 20. User device 20 comprises a processing system 21, a storage 22 and a receiver part 23. The user device 20 is configured to receive a randomly manipulated signal, for example a random signal or a randomly manipulated data signal, from the transmission system 10 at receiver part 23. Processing system 21 is configured to perform one or more measurements on the wirelessly received randomly manipulated signal. The processing system 21 of user device 20 may further be configured to generate one or more (pseudo-) random numbers based on the measurements performed on the received randomly manipulated signal. The (pseudo-) random numbers may be generated using random number generation algorithm 221 stored in storage 22 of the user device 20 and the generated random numbers may also be stored in storage 22.

User device 20 may also comprise a feedback algorithm 222 for generating a feedback signal to transmit to the transmission system 10.

The random number generation controller RNGC in the transmission system 10 facilitates that the user device 20 has available an externally generated signal that is sufficiently random for random number generation in the user device 20 irrespective of the conditions on the communication channel and irrespective of the hardware of the user device 20.

Future user devices 20 may comprise hardware with limited capabilities for cost reasons. For example, the disclosed transmission system 10 and method enable low-energy, low-cost and/or low-complexity user device 20 to generate pseudo-random numbers of sufficient quality.

For example, 3GPP recently issued a study on ambient power-enabled Internet of Things, loT, devices in Technical Recommendation 3GPP TR 22.840. The document discloses use cases and requirements for ambient power-enabled loT devices, hereinafter also referred to as ambient loT devices, being battery-less devices with limited energy storage capability (a capacitor may be included) wherein the energy is provided through the harvesting of radio waves, light, motion, heat or any other power source that could be suitable. Energy may, for example, be obtained from the randomly manipulated signal as defined above. Thus, energy is a very scarce resource in this context, and its usage is preferably optimized by limiting computations and/or the number and size of exchanged messages. Additionally, an ambient loT device may remain passive for extended periods of time before receiving a wake-up signal and starting to send data.

FIG. 2C shows a schematic illustration of an embodiment of a zero-energy, low-hardware complexity user device 20. The user device 20 comprises a processing part 21, a storage part 22 and a transceiver part 23 for wirelessly receiving and transmitting radio signals. The device 20 may further comprise a power harvesting part 24 and one or more sensors 25, or connectors therefore. It should be appreciated that device 20 may comprise a plurality of sensors 25 or connectors therefore. Examples of sensors include a location sensor, a temperature sensor, a humidity sensor, a light sensor, a pressure sensor, a motion sensor etc.

Processing part 21 may run an algorithm, such as algorithm 221 shown in FIG. 2B, from storage part 22 to generate pseudo-random numbers from a randomly manipulated signal received via transceiver part 23. Storage part 22 may also store data, such as a device identifier and/or data from sensors 25.

This user device 20 does not have an internal energy source (a capacitor may be included though) and is required to harvest external power as mentioned above. The device 20 is configured to harvest power to activate at least the processing part 21 and, optionally, the other parts, such as at least one of the storage part 22, transceiver part 23 and sensor 25. Power supply lines to these parts are indicated by the solid lines in FIG. 2C. Signaling lines are indicated by the dashed-dotted lines in FIG. 2C.

It should be appreciated that user device 20 as depicted in FIG. 2C may comprise more or fewer parts. Essentially, the device 20 is a battery-less device with limited, if any, energy storage capability. In one embodiment, the transceiver part 23 and energy harvesting part 24 may be integrated, at least in part, when the device 20 gathers energy from wireless radio transmissions from transmission system 10, such as from the randomly manipulated signal. This signal may also power the device 20 to generate the random number(s) by running a random number generation algorithm from storage 22 using processing part 21.

In more detail, the random number generation system 1 of FIG. 1 comprises a set of network-connected user devices 20. Each user device 20 may comprise a set of hardware and software (a communications module) capable of connecting to and communicating with the broader network (e.g. a 5G or 6G telecoms network). The communications module, as included in processing system 21, includes the capability to take measurements of communication channel properties (the "channel measurements"). Such channel measurements may primarily comprise channel state information, CSI, usually defined as a channel gain measurement. Metrics such as return signal strength (RRS), may also be utilized. Each channel measurement may have an associated identifier or timestamp to index distinct channel measurements. The user device 20 further comprises internal hardware and memory to enable the running of algorithms and storing of data. The user device 20 may further have a storage 22 for temporarily storing channel measurements and, optionally, associated timestamps.

The transmission system 10, for example implemented in a base station of a telecommunications network, serves all user devices 20 in a particular cell. The transmission system 10 may contain a communications module capable of connecting to and communicating with both the user devices within the cell and with the core network CN and internal hardware and memory to enable the running of algorithms, such as processing system 11 and storage 12 schematically depicted in FIG. 2A.

The resource allocation algorithm 122 as described above may comprise a scheduling algorithm, which orchestrates the scheduling of all communications between the transmission system 10 and the user devices 20 in its cell, creating a communications schedule. The scheduling algorithm is described as running on a base station as may be the case for a 5G telecommunications networks, for example. However, it could also run on any other hardware that can communicate with the transmission system 10. The scheduling algorithm creates a schedule including one or more high entropy phases, such that these phases have a minimal negative impact on other network tasks.

The algorithm 123 as described above may comprise a random number generation algorithm which generates a set of random numbers by using channel measurements from the user devices as a seed of randomness. A copy of this algorithm may exist independently on each user device 20. At least one copy of this random number generation algorithm may also exist on other network hardware. The random numbers may consist of a sequence of n random bits (taking a value of 0 or 1 at random).

The algorithm 124 as described above may comprise a randomness assessment algorithm which, for a set of time-varying channel measurements, determines if a given channel has sufficient randomness (i.e. high enough entropy) for tasks such as random number generation, outputting a binary pass/fail metric, i.e. a randomness assessment result. The randomness assessment algorithm may run on the transmission system 10 or any other network-connected hardware.

Transmission system 10 is a system that may comprise software and hardware required for creating high entropy communication channels between the transmission system 10 and user devices 20 during a high entropy phase, in accordance with the schedule. Two embodiments are described which may be used independently or together to enable high entropy channels.

One embodiment involves a multi-antenna system, such as MIMO antenna system, as described above in connection with FIG. 1. The MIMO antenna system may be part of a base station of a telecommunications network. The multi-antenna system may contain a set of transmit and receive antennas (i.e. an antenna array), capable of creating communication channels with user devices 20 and an antenna controller, which controls which antenna configuration of the antenna array at a given moment. The antenna configuration may comprise a sequence of single antenna selections or multiple antenna selections for the randomly manipulated signal. An antenna randomization algorithm may be used to generate a set of randomized time-varying antenna configurations, as an example of (a part of) algorithm 121 described above.

Another embodiment pertains to a reconfigurable reflective system RRS. The RRS may contain a grid of binary-phase tunable elements, positioned in proximity to the user devices 20 and to the transmission system 10 such that communications channels may be created between user devices 20 and transmission system 10 via the RRS. The phase response of each element may be controlled independently (e.g. by controlling the voltage across a pin diode or altering resonance frequency). The RRS may also contain a controller configured to control which configuration the RRS is in at any given moment. The RRS configuration may comprise a set of voltage values, one for each RRS element, which, when applied, results in a distinct phase shift for each element. For example, for an RRS of 8x8 binary-phase tunable elements, there are 2.4×10³⁸ possible RRS configurations. The RRS may comprise an algorithm which generates a set of randomized time-varying RRS configurations, as an example of (a part of) algorithm 121 described above.

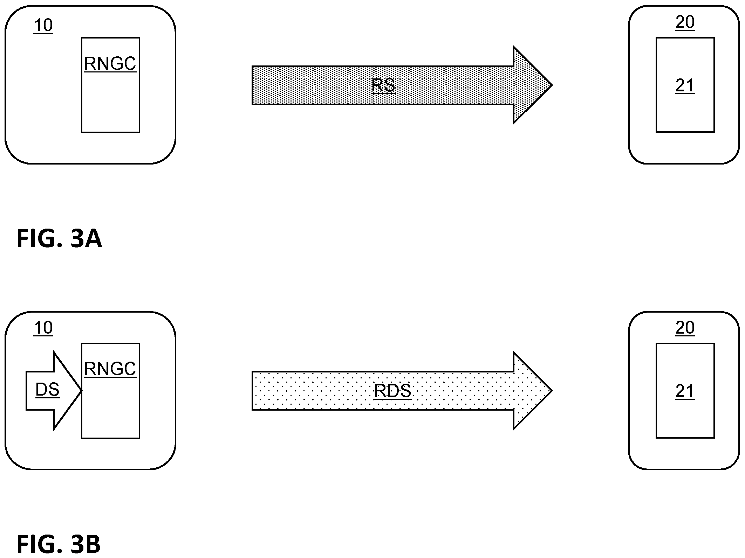

FIGS. 3A-3D are schematical illustrations of embodiments of operation of the transmission system 10 and the user devices 20 in the random number generation system 1 of FIG. 1. In contrast to the user device 20, the transmission system 10 may have sufficient capabilities to generate a (pseudo-) random signal RS. It should be noted that, in some occasions, it may be that the random signal manipulation is not required, since the communication channel itself is sufficiently dynamic, for example as a result from random noise or changing conditions the user device to generate random numbers, e.g. due to interference on the channel from external sources, such as other devices. To that end, the random number generation controller RNGC may be configured to conduct a randomness assessment on the communication channel to obtain a randomness assessment result and start random signal manipulation in dependence on the randomness assessment result.

FIG. 3A is a schematic illustration of an embodiment, wherein transmission system 10 comprises a random number generation controller RNGC configured to generate a random signal RS as the randomly manipulated signal for transmission over the communication channel to enable the user device 20 to generate the at least one random number from measurements on the random signal RS using processing system 21. Random signal RS may be a pre-stored random signal or a result of randomization of a source signal.

FIG. 3B illustrates that if a (user)data signal exists and if manipulation of the data signal is possible and appropriate, transmission system 10 may comprise a random number generation controller RNGC configured to randomly manipulate a data signal DS to obtain a randomly manipulated data signal RDS for transmission over the communication channel to enable the user device 20 to generate the at least one random number from measurements on the randomly manipulated data signal RDS using processing system 21. The density of the dots in the random data signal arrow of FIG. 3B indicates a certain amount of randomization of the data signal DS. The inventors have considered that under some circumstances, for example when a minimum data throughput can be achieved easily, the data signal DS may be manipulated to have a sufficiently random data signal RDS for the user device 20 to generate random numbers, while on the other hand, the data is safely, i.e. correctly, delivered to the user device 20 at an appropriate data rate. The random number generation controller RNGC may be configured to find this balance, for example to add random noise to the data channel that allows for both the data to be correctly delivered at the appropriate rate and to generate random numbers from measurements on the randomly manipulated data channel.

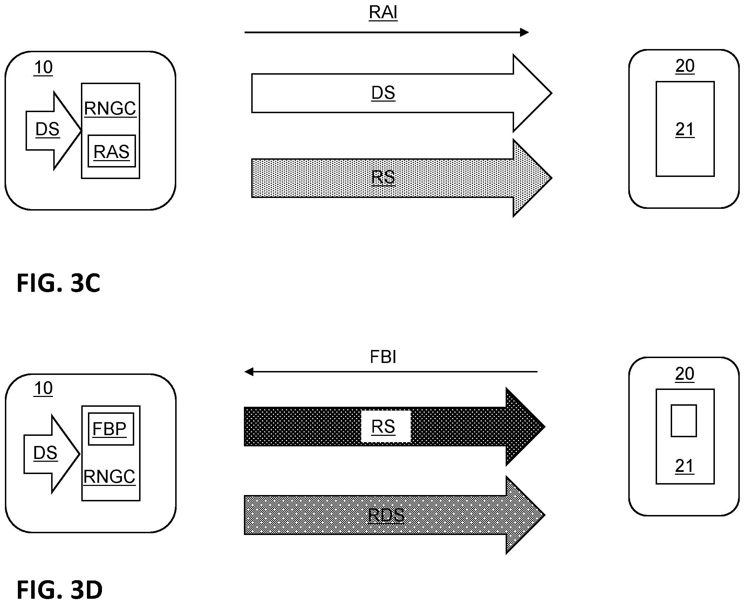

FIG. 3C is a schematic illustration of a transmission system 10 comprising a resource allocation system RAS, which may be embodied by having processor system 11 running a resource allocation algorithm as described with reference to FIG. 2A. Allocating resources, such as timing transmission of the randomly manipulated signal RS, enables one or more system components and/or devices in the random number generation system 1 to take account of the transmission of the randomly manipulated signal. For example, network tasks, such as network sensing, may be scheduled around the transmission of the randomly manipulated signal and, vice versa, transmission of the manipulated signal RS may be scheduled such that its effects are minimally invasive to system performance (for example, by scheduling transmission of the manipulated signal when communication load is low, (e.g. at night)).

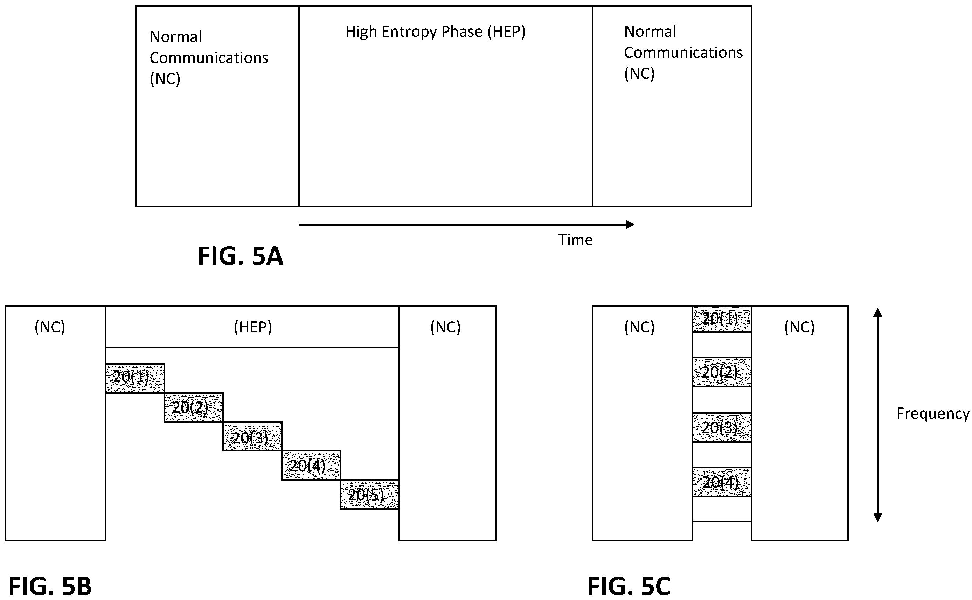

It should be appreciated that the transmission system 10 may allocate one or more system resources to transmission of the randomly manipulated signal, such as time, frequency (band), code, etc. of random signal RS as shown in FIG. 3C. The resource allocation system RAS may, for example, include a scheduling system for scheduling the transmission of the randomly manipulated signal RS in time, for example in relation to the transmission of data signal DS. A more detailed embodiment of a scheduling system is shown in FIGS. 5A and 5B. A more detailed embodiment for a frequency allocation system is shown in FIG. 5C.

Transmission system 10 may be configured to inform the at least one user device 20 of resource allocation information, RAI, for transmission of the manipulated signal. The user device 20 is configured to receive the resource allocation information RAI from the transmission system 10 and to derive the resource allocation of the randomly manipulated signal from the information RAI. The resource allocation information RAI may contain scheduling information containing information about when to receive the manipulated signal. The resource allocation information RAI may, alternatively or in addition, indicate the frequency of the randomly manipulated signal and/or information on a code associated with the randomly manipulated signal. The user device 20 is configured to process the resource allocation information RAI to generate the one or more (pseudo-) random numbers in accordance with the resource allocation information RAI. In this manner, the user device 20 can be informed when and/or how it can generate random numbers from its measurements, i.e. when the entropy of the channel may be high enough for appropriately performing this task. The resource allocation information may be transmitted to user device 20 in advance of the randomly manipulated signal.

FIG. 3D depicts an embodiment wherein the transmission system 10 comprises a feedback processing part FBP configured to receive a feedback signal with feedback information FBI from the user device 20 to control the random number generation controller RCGC in accordance with the feedback information FBI in this feedback signal. It is noted that the embodiment of FIG. 3D shows two embodiments of a randomly manipulated signal, viz. both a random signal RS and a random data signal RDS.

The feedback signal with feedback information FBI may be transmitted from user device 20 after generation of the one or more random numbers. For example, user device 20 may apply a feedback algorithm stored in storage 22 of the user device as described with reference to FIG. 2B.

The embodiment of FIG. 3D enables the random number generation controller RNGC to control the transmission of and/or the random signal manipulation of the randomly manipulated signal, for example dependent on one or more conditions in the user device 20 as indicated in the feedback information FBI. More generally, the random number generation controller RNGC may need to assess whether the random signal manipulation enables the user device to generate random numbers of sufficient quality. The random number generation controller RNGC, using the feedback processing part FBP processing the feedback information FBI, may be configured to conduct a randomness assessment on the randomly manipulated signal to obtain a randomness assessment result and to adapt the random signal manipulation in dependence on the randomness assessment result.

The feedback information in the feedback signal may contain one or more of the random numbers generated in the user device 20. The embodiment enables the transmission system 10 to obtain the random numbers from the user device 20 to assess the randomness thereof. Transmission system 10 may apply a random number assessment algorithm 124 for that purpose, as described with reference to FIG. 2A. The feedback signal may contain the random numbers as such, but the random numbers may also be transmitted together with further information from the user device 20. In one embodiment, the random numbers may be sent in the feedback signal together with data transmitted from the user device to the transmission system, for example for padding limited amount of data in the feedback channel. The data packets transmitted from the user device 20 may, for example, comprise sensor data as described with reference to FIG. 2C.

The random number generation controller RNGC shown in FIG. 3D, using for example feedback processor FBP, may be configured to conduct a randomness assessment on the random numbers to obtain a randomness assessment result and to adapt the random signal manipulation in dependence on the random assessment result. For example, as shown in FIG. 3D, if the randomly manipulated signal is a random signal RS, the randomness assessment result may indicate that the quality of the random numbers generated in the user device 20 as indicated in the feedback information FBI is insufficient. As a consequence, the random number generation controller RNGC may enhance the randomness of the channel as shown by the increased dot density in FIG. 3D as compared to FIG. 3A.

In another embodiment, for example, the randomly manipulated signal is a randomly manipulated data signal RDS as shown in FIG. 3D from which random numbers have been generated in user device 20, and the feedback information FBI of the feedback signal contains an indication of the delivery of the data. The indication in the feedback signal may be a positive acknowledgement, ACK, that the data was delivered in good fashion to the user device 20. This indication signals to the transmission system that the random signal manipulation of the data signal did not interfere with good delivery of the data contained in the data signal DS. Conversely, if the feedback signal contains an indication that the data was not delivered to the user device, i.e. a negative acknowledgement, NACK, this indication signals that the random signal manipulation was too severe for the data to be delivered to the user device under the current channel conditions. The random number generation controller RNGC may be configured to adapt the random signal manipulation of the data signal in dependence on the indication of delivery of the data.

For example, as shown in FIG. 3D, if the randomly manipulated signal is a random data signal RDS, the feedback information FBI may indicate that the data is appropriately received at the user device 20, i.e. the feedback processor FBP receives ACKs from the user device 20. As a result, the random number generation controller RNGC may increase the randomness for the random data signal RDS, as shown in FIG. 3D by the increased dot density as compared to FIG. 3B.

The resource allocation system RAS as shown in FIG. 3C as part of the random number generation controller RNGC may also benefit from the feedback information FBI. The resource allocation system RAS may be configured for separate allocation of resources to the transmission of the data signal DS and the random signal RS. The resource allocation system RAS is configured to allocate resources to at least one of transmission of the random signal and transmission of the data signal in dependence on the feedback information FBI. For example, in this embodiment, the random number generation controller RNGC may contain a scheduling system configured to switch from transmission of the random signal to transmission of the data signal in dependence on the feedback signal.

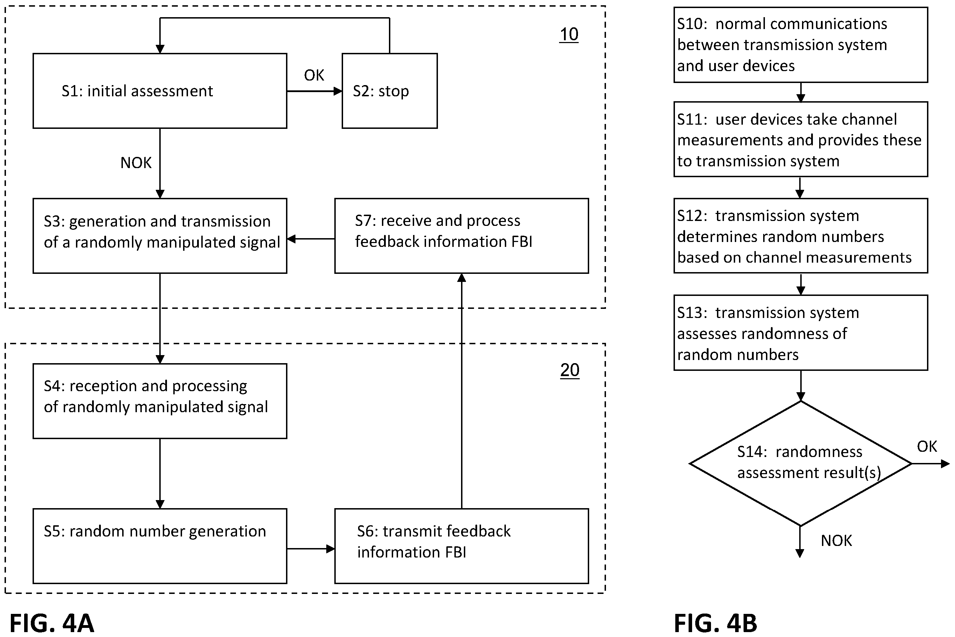

FIG. 4A illustrates some steps of an embodiment of a method for operating the transmission system 10 and user device 20.

Step S1 in FIG. 4A illustrates an initial assessment by the transmission system 10 of random number generation in the user device 20, such as an assessment of the channel conditions. The initial assessment may make use of information delivered by user device(s) 20, such as channel state information, CSI, to generate random numbers and investigate the quality thereof. If the quality is sufficient (OK), generation and transmission of a randomly manipulated signal as disclosed herein is not necessary, as shown by step S2, Step S1 may be conducted repeatedly, for example periodically. Step S1 is an optional step.

Step S3 illustrates the basic step of generating and transmitting the randomly manipulated signal, such as a random signal or a randomly manipulated data signal. This step may be performed if the initial assessment of step S1 yielded that the quality of the random numbers in the user device 20 is inadequate (NOK). Step S3 may include the determination of resources for the wireless transmission of the randomly manipulated signal, such as a time interval or time slot, a frequency and/or a code and transmission of resource allocation information RAI (see FIG. 3C, not shown in FIG. 4A) to the user device 20.

Step S4 in the user device 20 illustrates wireless reception of the randomly manipulated signal, such as random signal RS or randomly manipulated data signal RDS and processing thereof, such as performing signal measurements. Step S4 may also include the processing of (previously received) resource allocation information RAI to determine when and/or how the randomly manipulated signal will be received.

In step S5, user device 20 generates one or more random numbers from the measurements. In step S6, the user device 20 transmits feedback information to the transmission system 10. Step S8 illustrates the step of receiving and processing feedback information FBI in a feedback signal from a user device 20 as described above. Transmission system 10 may use this feedback information for various purposes, including adjustment of the randomly manipulated signal as shown by the feedback loop in FIG. 4A.

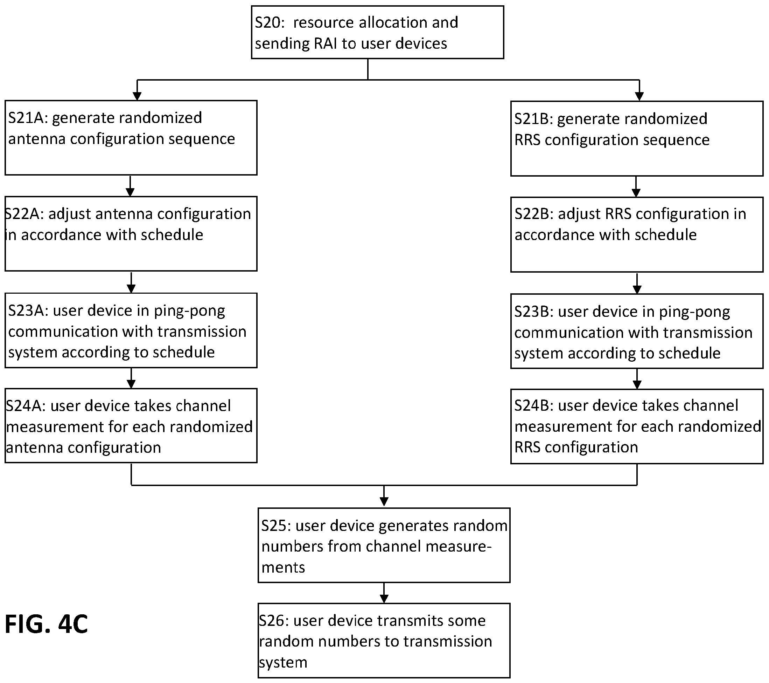

FIGS. 4B and 4C are more detailed illustrations of some steps in an embodiment for operating the transmission system 10.

FIG. 4B provides an embodiment for steps S1 and S2, as shown in FIG. 4A.

Initially, the transmission system 10 may assess the normal level of randomness of communication channels in the environment, to determine if the randomly manipulated signal is necessary. User devices 20 may engage in communications with the transmission system 10 in accordance with the existing schedule as shown in step S10. As part of normal communications, user devices 20 may take channel measurements as shown in step S11. For example, user device 20 may measure channel state information, CSI, as the channel gains between each utilized set of antennas (if user device 20 and transmission system 10 have more than one antenna).

The transmission system 10 contains a copy of the random number generation algorithm stored in the user device 20. In step S12, this copy of the random number generation algorithm running on network hardware (e.g., the transmission system 10, such as a base station) uses the channel measurements to generate sequences of random numbers. The random number generation algorithm may use any method from the prior art for this purpose. The random number generation algorithm retrieves a set of channel measurements for each recently active channel, and possibly their associated timestamps.

For example, for each set of measurements, a threshold value may be set. The threshold value may be the average channel measurement value across the set. For the first channel measurement in the set, a binary 1 is assigned if the value of the channel measurement is above the threshold, and a binary 0 is assigned if it is below the threshold. This may be repeated for one or more, for example all, numbers in the set, until a set of binary values is created. These binary values are returned as a set of random numbers for assessment. This may be repeated for successive sets of channel measurements.

The randomness assessment algorithm may run on one or more sets of random numbers to calculate a randomness assessment result as shown in step S13. For each set of random numbers, the randomness assessment algorithm may utilize one or more algorithms known in the art for assessing randomness in binary sequences.

The result or results of the assessment(s) may be a pass/fail, indicated as OK and NOK, respectively, as shown in step S14. The assessment may include a frequency test, a runs test and/or a pattern identification test, for example. A frequency test determines the proportions of zeroes and ones for the entire sequence. The test assesses the closeness of the proportion of 1s to ½, as would be expected if the sequence is truly random. A runs test determines the total number of runs in the sequence of bits, where a run is a sequence of identical bits. If the number of runs of various lengths are as expected for a random binary sequence (within some tolerance), the test passes. A pattern identification tests, such as the serial test or approximate entropy test, identifies patterns across the sequence of various lengths *m*, to assess uniformity. If a sequence is truly random, any m-bit pattern should be as likely as any other m-bit pattern. If this is established (within some tolerance), the test passes. Other tests are also possible.

If the outcome of any test applied to a set of random numbers is `fail' (NOK), then that sequence may be defined as not sufficiently random, and be assigned a fail as a whole. The binary randomness assessment result may then be calculated based on the combined pass/fail outcomes of all sets of random numbers. For example, the randomness assessment result may be `pass' (OK) if 90% of tested sets of random number pass the series of tests, and `fail' otherwise.

FIG. 4C illustrates some steps once it is established that a randomly manipulated signal, i.e. a high entropy phase, is necessary. FIG. 4C provides some details regarding steps S3-S7 depicted in FIG. 4A. In FIG. 4C and the below description, it is assumed that the randomly manipulated signal is a random signal RS (and not a randomly manipulated data signa, RDS).

In step S20, the transmission system 10 may determine and allocate resources for this task. In the embodiment of FIG. 4C, resource allocation involves time scheduling of the high entropy phase HEP, as shown in FIGS. 5A and 5B, using a scheduling algorithm. In FIG. 5A, the high entropy phase HEP is scheduled in between periods of normal communications NC when the randomly manipulated signal is not transmitted. As shown in FIG. 5B, during the high entropy phase HEP, several time slots may have been allocated to different user devices 20(1), 20(2), 20(3), 20(4) and 20(5).

Another form of resource allocation is shown in FIG. 5C, wherein the randomly manipulated signals are transmitted for different user devices 20(1), 20(2), 20(3) and 20(4) at the same time but at a different frequency. This allows simultaneous transmission of the randomly manipulated signals for a plurality of user devices, possibly in combination with one or more data signals.

The resource allocation information RAI, such as the schedule of the randomly manipulated signal, may be transmitted to a user device 20.

The scheduling algorithm may generate a schedule which includes one or more time-slots allocated to one or more high entropy phases. To enable a high entropy phase, HEP, the scheduling algorithm may generate a schedule enabling multiple synchronized events. For the transmission system 10 to randomize channels for the duration of the high entropy phase, timings for when to switch between which antennas are being used are determined for a multi antenna system, whereas, for an RRS system, timings for when to switch between randomized RRS configurations are determined.

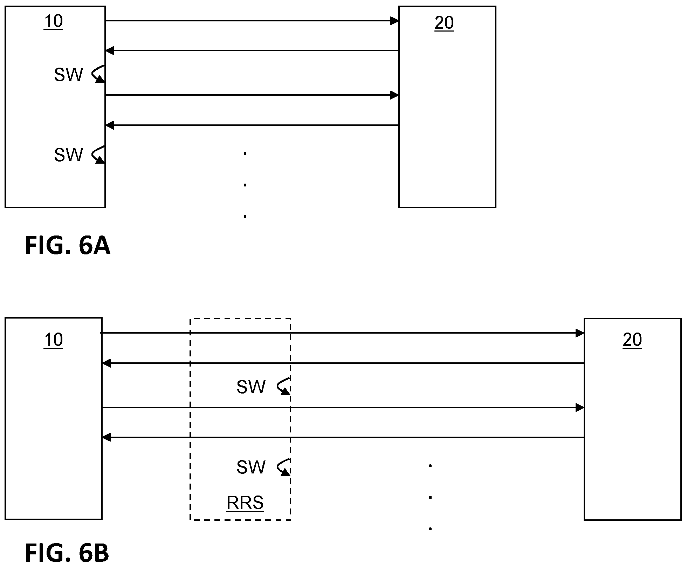

For each user device 20 which needs to generate random numbers a unique timeslot may be used during this high entropy phase, as shown in FIG. 5B. During this timeslot, the user device 20 engages in communications with the transmission system 10, and the transmission system 10 returns messages to the user device. This may be 'ping-pong' style communications, where the user device 20 and transmission system 10 take it in turns exchanging packets on the randomized channels, as shown in FIG. 6A when a multi-antenna system is applied and in FIG. 6B when an RRS is applied. The packet length needs to be long enough that a channel measurement can be taken, and the information content of the packet may be important when data is conveyed or not important if no data needs to be conveyed. The timings of these 'ping-pong' communications may be synchronized with the channel randomization of the high entropy phase system.

The scheduling algorithm as applied in step S20 may schedule transmission of the randomly manipulated signal, i.e. the start of the high entropy phase, to be minimally invasive to other user devices 20, communications or other network tasks on the network.

Embodiments of such scheduling include one or a combination of the following.

In one embodiment, the scheduling algorithm may schedule the high entropy phase for periods of time where communications requirements are likely to be low (e.g. at night).

In one embodiment, the scheduling algorithm may schedule the high entropy phase for periods of time where sensing tasks carried out by the network are unlikely to be required.

In one embodiment, the scheduling algorithm may reschedule the high entropy phase if one or more user devices 20 must (unexpectedly, for example) transmit large amounts of data, or transmit emergency messaging.

In one embodiment, the scheduling algorithm may schedule the high entropy phase specifically to co-occurwith tasks which are not impacted by high channel randomness, such as energy provision to devices charged by wireless transmissions, such as zero energy devices as shown in FIG. 2C. It should be noted, however, that the randomly manipulated signal may also be used to power the user device 20 as explained with reference to FIG. 2C.

In one embodiment, if it is not possible to determine a continuous time-slot within which all participating user devices 20 can be allocated time to engage in 'ping-pong' communications, the scheduling algorithm may schedule two or more high entropy phases of shorter duration.

In one embodiment, the scheduling algorithm may also not allocate time to some user devices 20 and some tasks during the high entropy phase. The scheduling algorithm may, for example, avoid allocating time-slots to sensing tasks to user devices 20 during a high entropy phase, as the high entropy phase may disrupt this task The scheduling algorithm may avoid allocating time-slots for sensing tasks of transmission system 10 during the high entropy phase, as continuous back-and-forth communication is required.

When resources have been allocated in the transmission system 10 for transmission of the randomly manipulated signal and the resource allocation information is provided to the user device(s) 20, generation and transmission of the randomly manipulated signal may commence to generate the (pseudo-) random numbers in the user device 20.

In the case that a multi-antenna system is utilized, an antenna randomization algorithm may run through a pseudorandom number generation scheme to generate a random sequence of single antenna selections, outputting the sequence as the randomized antenna configuration in step S21A. The processing system may adjust, in step S22A, the antenna configuration to match the randomized antenna configuration in accordance with the schedule determined in step S20. For example, the MIMO-antenna system may work in single-input, single-output (SISO) mode, where the antenna controller runs through the randomized antenna configuration, switching to the next antenna at a timing defined by the schedule.

In step S23A, messages are sent between the transmission system 10 and the user device 20 in a 'ping-pong' fashion, with timings determined by the schedule, synchronized with the randomized antenna switching as shown in FIG. 6A. Switches SW in FIG. 6A define switches in antenna configuration.

In step S24A, the user device 20 takes a channel measurement for each antenna configuration, in accordance with the schedule.

Likewise, for a system applying a reconfigurable reflective surface RRS, an RRS randomization algorithm may run in step S21B through a pseudorandom number generation scheme to generate random phase alterations for each element of the RRS, outputting the combination as a randomized RRS configuration. This is repeated to output a sequence of randomized RRS configurations to the a processing system of transmission system 10, embodied, for example, in the RRS module.

The processing system may adjust, in step S22B, the RRS configuration to match the provided randomized RRS configuration in accordance with the schedule determined in step S20. The RRS passes through the sequence of randomized RRS configurations as instructed. this ensures that any communications channels created between devices in the vicinity will be high entropy channels.

In step S23B, the user device 20 engages in 'ping-pong' communications with the transmission system 10 as instructed by the schedule, or (in device-to-device embodiments) with other user device(s), utilizing high entropy channels. The timing of these communications are defined in the schedule such that each communication coincides with a new randomized RRS configuration. Switches SW in FIG. 6B define switches in RRS configuration.

In step S24BA, the user device 20 takes a channel measurement for each RRS configuration, in accordance with the schedule.

On each user device 20, the local copy of the random number generation algorithm uses the channel measurements to generate sets of random numbers in step S25, which are stored in local storage for later use. To this end, the user device 20 may use the following method.

Once a minimum number of channel measurements has been stored in local storage (e.g. 10 measurements), the random number generation algorithm may take them as a set. A threshold may be set for the user device 20. For example, the threshold value may be the average channel measurement value across the set. For the first channel measurement in the set, a binary 1 is assigned if the value of the channel measurement is above the threshold, and a binary 0 is assigned if it is below the threshold. This may be repeated for all numbers in the set, until a set of binary values is created. These binary values may be used as a set of random numbers and stored in local storage on the user device 20 for later use.

In step S26, a fraction of the sets of random numbers generated (e.g. 1 in every10 random number) may be relayed to the randomness assessment algorithm in the transmission system 10, to ensure the created high entropy channels have sufficient randomness. The transmitted random numbers may or may not be stored locally as a random number. In the case of a negative `fail' randomness assessment result, the random number generation algorithm halts. If it is noted that the new random numbers are not random enough because e.g. the radio channel has become static generating random numbers may be temporarily stopped and/or storing these insufficiently random number is stopped. The stored random numbers of sufficient quality may still be used.

The present disclosure discloses a random number generation system 1 enabling the scheduling and maintenance of a high entropy phase during which a minimum level of channel randomness is ensured between a transmission system 10 and user devices 20, such that the user devices 20 can generate random number even in environments which are usually static. The reliable random number generation is enabled on devices with hardware limitations that would usually prevent them from generating random numbers. Therefore, user devices 20 with strict hardware limitations may now perform tasks which require random numbers, such as ensuring differential privacy. This is particularly important for low-power sensing devices, for which ensuring differential privacy at source is important, but lack the hardware to engage in random number generation. Although random number generation is enabled by the transmission system 10, the (pseudo-) random numbers themselves may be generated locally on-device, such that they may be kept secret.

The resource allocation, such as time scheduling may be used for a predictable, controlled period of high channel randomness and may be included as part of a shared communications schedule, such that devices which rely on channel measurements for random number generation have a reliable times-slot in which to do so with a guaranteed minimum level of randomness and devices or tasks for which a high channel randomness would be detrimental (e.g. communicating at high data rates, sensing tasks) may be scheduled at times outside of the high entropy phase, and these may take priority in the schedule if urgent.

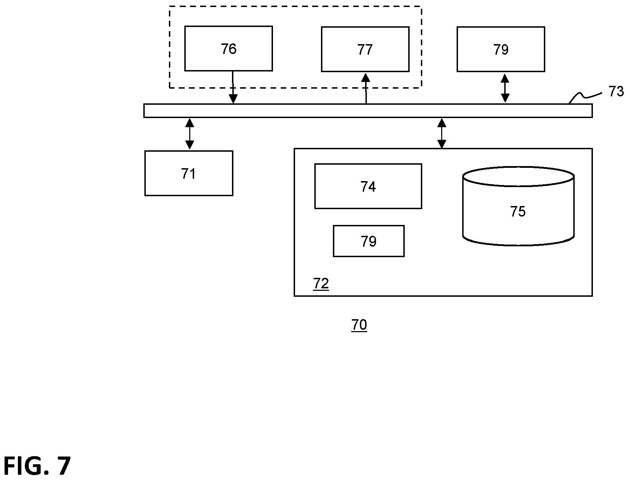

FIG. 7 depicts a block diagram illustrating an exemplary processing system according to a disclosed embodiment, e.g. a (part of a) transmission system 10 or user device 20 as described above for use in a random number generation system 1. As shown in FIG. 7, the processing system 70 may include at least one processor 71 coupled to memory elements 72 through a system bus 73. As such, the processing system may store program code within memory elements 72. Further, the processor 71 may execute the program code accessed from the memory elements 72 via a system bus 73. In one aspect, the processing system may be implemented as a computer system that is suitable for storing and/or executing program code. It should be appreciated, however, that the processing system 70 may be implemented in the form of any system including a processor and a memory that is capable of performing the functions described within this specification.

The memory elements 72 may include one or more physical memory devices such as, for example, local memory 74 and one or more bulk storage devices 75. The local memory may refer to random access memory or other non-persistent memory device(s) generally used during actual execution of the program code. A bulk storage device may be implemented as a hard drive or other persistent data storage device. The processing system 70 may also include one or more cache memories (not shown) that provide temporary storage of at least some program code in order to reduce the number of times program code must be retrieved from the bulk storage device 75 during execution.

Input/output (I/O) devices depicted as an input device 76 and an output device 77 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 7 with a dashed line surrounding the input device 76 and the output device 77). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 78 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 70, and a data transmitter for transmitting data from the processing system 70 to said systems, devices and/or networks. Modems, cable modems, and Ethernet cards are examples of different types of network adapter that may be used with the processing system 70.

As pictured in FIG. 7, the memory elements 72 may store an application 79. In various embodiments, the application 79 may be stored in the local memory 74, the one or more bulk storage devices 75, or apart from the local memory and the bulk storage devices. It should be appreciated that the processing system 70 may further execute an operating system (not shown in FIG. 7) that can facilitate execution of the application 79. The application 79, being implemented in the form of executable program code, can be executed by the processing system 70, e.g., by the processor 71. Responsive to executing the application, the processing system 70 may be configured to perform one or more operations or method steps described herein.

In one aspect of the present invention, one or more components of the base station selection support system and/or user device for use with such a base station selection support system, as disclosed herein may represent processing system 70 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 71 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated..

## Claims

1. A transmission system for wireless transmission of a randomly manipulated signal over a communication channel to at least one user device, wherein the user device is configured for generating at least one random number from one or more measurements on the randomly manipulated signal, wherein the transmission system has a random number generation controller configured for random signal manipulation to generate the randomly manipulated signal for transmission over the communication channel to enable the user device to generate the random number from measurements on the randomly manipulated signal.

2. The transmission system according to claim 1, wherein the randomly manipulated signal contains a data signal with data for the user device and wherein the random number generation controller is configured to randomly manipulate the data signal to obtain a randomly manipulated data signal for transmission over the communication channel to enable the user device to generate the at least one random number from measurements on the randomly manipulated data signal.

3. The transmission system according to claim 1, wherein the random number generation controller is configured to generate a random signal as the randomly manipulated signal for transmission over the communication channel to enable the user device to generate the at least one random number from measurements on the random signal.

4. The transmission system according to one or more of the preceding claims, wherein the transmission system contains a resource allocation system configured to allocate resources to the transmission of the randomly manipulated signal, such as the random signal according to claim 3, wherein, optionally, the transmission system is configured to inform the at least one user device of resource allocation information for transmission of the randomly manipulated signal.

5. The transmission system according to claim 4, wherein the resource allocation system is configured to allocate separate resources to transmission of a data signal and transmission of the random signal on the communication channel, wherein, optionally, the resource allocation system is configured to allocate resources for the transmission of the random signal dependent on at least one of resource allocation of the randomly manipulated data signal, and a load of a network accommodating the transmission system.

6. The transmission system according to one or more of the preceding claims, wherein the transmission system is configured to receive a feedback signal from the user device, wherein the random number generation controller is configured to be controlled, at least in part, by the feedback signal.

7. The transmission system according to claim 6, wherein the feedback signal contains one or more random numbers and wherein the random number generation controller is configured to conduct a randomness assessment on the random numbers to obtain a randomness assessment result and to adapt the random signal manipulation by the random number generation controller in dependence on the random assessment result.

8. The transmission system according to claim 6, wherein the randomly manipulated signal contains a data signal with data for the user device and the manipulated signal is a randomly manipulated data signal, wherein the feedback signal contains an indication of delivery of the data at the user device and wherein the random number generation controller is configured to adapt the random signal manipulation of the data signal in dependence on the indication of delivery of the data.

9. The transmission system according to claim 6, wherein the random number generation controller contains a resource allocation system for separately allocating resources to transmission of a data signal and transmission of a random signal and wherein the resource allocation system is configured to allocate resources to at least one of transmission of the random signal and transmission of the data signal in dependence on the feedback signal.

10. The transmission system according to one or more of the preceding claims, wherein the random number generation controller is configured to one or more of the following:
conduct a randomness assessment on the randomly manipulated signal to obtain a randomness assessment result and to adapt the random signal manipulation by the random generation controller in dependence on the randomness assessment result;
conduct a randomness assessment on the communication channel to obtain a randomness assessment result and start random signal manipulation by the random number generation controller in dependence on the randomness assessment result.

11. The transmission system according to one or more of the preceding claims, wherein the transmission system comprises at least one of a reconfigurable reflective surface, RRS, system and a multiple-input multiple-output, MIMO, system to conduct random signal manipulation, wherein, optionally, the transmission system is contained in one or more of:
a network component of a 3GPP compliant telecommunications network, such as a base station;
a network component of a local network, such as an enterprise network;
a stand-alone device; and
another user device.

12. A user device for use with the transmission system according to one or more of the preceding claims, wherein the user device is configured to:
receive a randomly manipulated signal, for example a random signal or a randomly manipulated data signal, from the transmission system;
perform one or more measurements on the received randomly manipulated signal;
generate one or more random numbers based on the measurements performed on the received randomly manipulated signal.

13. The user device according to claim 12, wherein the user device is configured to receive resource allocation information from the transmission system, wherein the resource allocation information contains at least one of information when to receive the randomly manipulated signal, information on a frequency of the randomly manipulated signal, information on a code associated with the randomly manipulated signa, etc. , wherein the user device is configured to process the resource allocation information to generate the one or more random numbers in accordance with the resource allocation information.

14. The user device according to claim 12 or 13, wherein the user device is configured to transmit a feedback signal to the transmission system after generation of the one or more random numbers, wherein the feedback information, optionally, contains one or more of the following:
one or more of the generated random numbers, wherein the random numbers are optionally contained in a data transmission from the user device;
if the randomly manipulated signal is a randomly manipulated data signal from which random numbers have been generated, an indication of the delivery of the data.

15. The user device according to one or more of the preceding claims 12-14, is an ultra-low energy device or zero energy device, such as a sensing device.
